# EUROPEAN PATENT SPECIFICATION

(11) **EP 2 156 758 B1**
(45) Date of publication and mention of the grant of the patent: **20.06.2012**
(21) Application number: 09168178.3
(22) Date of filing: 19.08.2009
(51) Int. Cl.: A41D 13/00, A41D 27/24, A41H 3/04, A41H 42/00, B29C 65/00

(54) **Apparel**
Bekleidungsstück
Vêtement

(30) Priority: 19.08.2008 DE 102008038360
(43) Date of publication of application: 24.02.2010
(73) Proprietor: adidas International Marketing B.V., 1062 KR Amsterdam (NL)
(72) Inventor: Stattelmann, Martina, 91074, Herzogenaurach (DE); Ludwig, Nina Maria, 90419, Nürnberg (DE); Nolan, Pauline, 21400, Ayamonte, Huelva (ES); Simon, Andrea, 79112, Freiburg i. Br. (DE)
(74) Representative: Wegner, Hans

(56) References cited:
- EP-A- 1 491 105
- EP-A- 1 927 638
- WO-A-01/26494
- WO-A-03/013294
- WO-A-2008/134656
- US-A- 4 645 629

## Description

### 1. Technical Field

The present invention relates to apparel which provides high freedom of movements and wearing comfort. The present invention relates in particular to a garment with three-dimensionally shaped areas.

### 2. Prior Art

Apparel, in particular sportswear, frequently uses light and elastic materials such as Elastan which fit more tightly to the body than conventional textile materials. Conventional garments impede movements due to their wide shape and require more effort to move a part of the body due to the higher weight.

On the other hand, a tight-fitting garment is stretched and compressed and therefore wrinkles are created during movements which reduces the freedom of movements of the wearer and leads of the garment being worn out. Such disadvantages are particularly relevant for sportswear when subjected to fast and frequent movements, for example when worn by a runner.

In the prior art the creation of three-dimensional garments is known. For example, US patent 4,645,629 describes the manufacture of a shirt by heat moulding using a mould, in order to simplify the manufacturing process. During the process, two fabric sheets are pressed, by two negative moulds, to a positive mould of an upper part of the body and are subsequently connected. However, seams remain at the connection of the two fabric sheets.

Three-dimensional shaping of a textile material by moulding is furthermore known from US patent 6,659,501 where a method for making shoulder sections for garments which are to be rainproof is disclosed. Similar methods are described in the patents US 5,855,124, US 3,597,800 and US 4,202,853. DE 1933087 describes forming of garments by heat.

Furthermore, US patent 5,031,242 describes bellows at the elbows and at the knees. The patents US 5,159,721, US 5,608,913 and US 6,817,029 disclose various inserts for garments, in order to improve the freedom of movements.

The use of a curved seam to shape a garment in order to provide a better three-dimensional fit is described in WO 01/26494. The use of seams to shape a garment is furthermore described in US 3,959,826, EP 0 519 135 B1, US 3,744,052, DE 8701148 U1, FR 2 754 680 A1, US 3,654,632, US 5,724,674, and FR 2 361 269.

EP 1 673 991 B1 describes compression stockings formed by connected parts with first parts having normal elasticity, second parts having compression and third parts with increased elasticity. WO 02/064073 A1 relates to a compression garment which covers the leg of portion of a subject. The garment comprises material which allows compressive force of the garment to be applied to one or more muscles of the leg.

Despite the three-dimensionally formed areas used in these garments, the garments still have seams which significantly reduce wearing comfort by skin chafing. Seams reduce the wearing comfort since they are usually stiffer than the textile material of the garment and even may comprise sharp edges which chafe the skin during movements. This is particularly disadvantageous for tight-fitting sportswear which has to provide comfort also during movements.

From document EP 1 491 195 A1 a welded microseam is known. Based on a curvature of the welded seam, the final combination of components comprises a three-dimensional structure.

It is therefore the problem of the present invention to provide a garment which combines freedom of movements and wearing comfort and which in particular avoids unpleasant chafing of seams on the skin as much as possible.

### 3. Summary of the invention

The invention is defined in independent claim 1.

The first three-dimensionally shaped area formed by heat moulding according to the invention increases freedom of movements and wearing comfort because stretching and compressing of the garment during movements is reduced. However, it is difficult to manufacture a garment having a good fit, especially a tight fitting garment where the fit is achieved exclusively through the use of three-dimensionally heat-moulded areas. Therefore, seams are necessary for the manufacture of the garment, even if they reduce the wearing comfort.

Only the inventive combination of the first three-dimensionally shaped area formed by heat moulding and a curved seam which connects the front area and the back area of the garment and which is shaped so that a second three-dimensionally shaped area of the garment is created, leads to a garment which provides both increased freedom of movements by reduced stretching and compressing of garment and improved wearing comfort by reduced skin chafing. Since the seam is curved, it is not exclusively located in areas of the body (such as between the legs) which are particularly sensitive to skin irritation by chafing seams.

In contrast to this, in prior art garment constructions, those seams which are usually needed for connecting the front and the back of the garment typically run essentially straight on the lateral sides on the upper part of the body and between the legs. However, seams in these areas are most uncomfortable for athletes. For example, arms and legs are continuously moving during running so that the arms permanently chafe laterally on the upper body, respectively the legs chafe against each other. If in addition seams are located laterally at the upper body or between the legs, friction is further increased and may cause skin chafing. In the garment according to the invention, the seam is curved and therefore leads away from the lateral area at the upper body or the area between the legs.

In addition, a first three-dimensionally shaped area formed by heat moulding according to the invention has further advantages. First, freedom of movements is improved by reducing stretching and compressing of the garment during movements. This applies in particular in the area of joints such as the shoulder, the elbow or the knee where garments are particularly deformed by movements of the joints. On the other hand, wearing comfort is improved in those areas in which the surface of the human body is strongly curved since deformations of the garment are reduced in these areas.

Further, the use of the first three-dimensionally shaped area may reduce seams, in particular darts, which otherwise would be required for creating a three-dimensional shape. The same advantages apply for the second three-dimensionally shaped areas of the garment shaped by the seam according to the invention. Such a three-dimensionally shaped area may be created, for example, by connecting (flat) patterns having non-parallel edges.

In a preferred embodiment the seam intersects a medial frontal plane of the body of the wearer of the garment. The medial frontal plane is the medial plane which is visible in a frontal view of a human body and which vertically intersects the body. This is advantageous since the medial frontal plane of the body comprises several particularly sensitive areas of the body and since the seam only intersects these areas but is not fully located within these areas. Apart from creating the second three-dimensionally shaped area, the seam according to the invention thereby fulfils a second independent function by avoiding sensitive areas of the body.

In a preferred embodiment the seam intersects the medial frontal plane of the body of the wearer of the garment more than once. This may be required for particular patterns. However, also in this case the seam does not run in the medial frontal plane so that skin chafing is still avoided.

In a preferred embodiment the seam comprises two oppositely curved sections. This particular form of the seam facilitates, together with the feature of second three-dimensionally shaped areas created by the seam, an adjustment of the garment to three-dimensional anatomical shapes with changing curvatures. The creation of shaped areas using a curved seam is advantageous for larger regions compared to the use of areas formed by moulding and can be accurately manufactured.

In a further embodiment the seam comprises an upper curved section which extends at least partially in front of the medial frontal plane and a lower curved section which extends at least partially behind the medial frontal plane. This particular form of the seam facilitates an accurate match of the shape of the garment with the curved anatomical surfaces of the body.

It is further preferred if the front area and the back area of the garment are manufactured from a single textile part. In this way, the number of seams of the garment can be significantly reduced which increases the wearing comfort.

In a further embodiment the seam is bonded by welding and/or gluing. It is particularly preferred if the seam is located on the side of the garment away from the skin. Skin irritations are not only caused by the location of the seams but also by the particular form of the seams themselves. The manufacture of a seam by welding and/or gluing enables a very flat and even seam and therefore minimizes skin irritation. By further arranging the seam on the side of the garment away from the skin, all edges of the textile material are located on the outside and therefore cannot cause skin irritation.

In a further embodiment a sleeve edge of the garment is formed such that it comprises a recess for the bones of the wrist. Further, a trouser leg edge of the garment is formed such that it comprises a recess for the ankle. This supports a tight-fitting garment which avoids pressure and chafing on these particularly sensitive bones caused by the sleeve edge and/or respectively the trouser leg edge.

It is further preferred if the garment comprises flexible inserts. Since different areas of the garment are differently stretched, the freedom of movements can be improved by providing particular areas with flexible inserts, in particular when these areas are subject to strong deformations.

It is furthermore preferred if the garment comprises bellows. Since, for example, joints with a large range of movement such as the elbow or the knee cause corresponding deformations of the garment, it can be advantageous to arrange bellows in these areas.

In further embodiments the at least one first three-dimensionally shaped area of the garment formed by heat moulding is arranged in the area of the neck, the shoulder, the elbow, the breast and/or the knee. In these areas the human body has a particularly strong curvature so that a correspondingly shaped three-dimensional area reduces skin chafing and/or increases freedom of movements.

It is preferred if the garment essentially consists of Polyester, particularly preferred 100% Polyester. The first three-dimensionally shaped area formed by moulding is preferably manufactured with a temperature of 150°C - 200°C, particularly preferred 185°C - 195°C. This combination of material and temperature results in a particularly effective shaping of the three-dimensionally shaped area formed by heat moulding.

In an alternative embodiment the garment essentially consists of a Nylon-Elastan textile material, particularly preferred 100% Nylon-Elastan, and the three-dimensionally shaped area formed by heat moulding is manufactured at a temperature of 150°C - 200°C, preferably 195°C.

Manufacturing the three-dimensionally shaped area formed by heat moulding preferably lasts 10 - 25 seconds. Already after this duration a durable shaping of the first three-dimensionally shaped area is obtained, without damaging the material of the garment.

Preferably the mould for forming the three-dimensionally shaped area has an immersion depth of 1.5 to 2.5 times the resulting depth of the formed three-dimensional area. It is particularly preferred that the immersion depth of the mould is in the range of 45 mm to 90 mm and the resulting depth of the formed three-dimensional area is in the range of 15 mm to 60 mm.

Further embodiments are the subject of further dependent claims.

### 4. Short description of the drawings

In the following aspects of the present invention are explained with reference to the accompanying drawings. These figures show:
- Fig.1 :: Schematic views of particularly stressed zones of garments during movement;
- Fig. 2:: a schematic front view and back view of an article of sportswear according to one embodiment;
- Fig. 3:: a schematic representation of anatomical planes of a human body;
- Fig. 4:: a pattern of a front area and a sleeve of the article of sportswear in Fig. 2;
- Fig. 5:: a pattern of a back area and a sleeve of the article of sportswear in Fig. 2;
- Fig. 6:: a pattern of an article of sportswear which consists of a single part;
- Fig. 7:: a pattern of an article of sportswear with a front area and a back area;
- Fig. 8:: a further embodiment of an article of sportswear;
- Fig. 9:: a further embodiment of an article of sportswear;
- Fig. 10:: a schematic front view and back view of an article of sportswear according to one embodiment;
- Fig. 11:: derivation of a pattern of an article of sportswear from fig. 10;
- Fig. 12:: derivation of a pattern of an article of sportswear from fig. 10;
- Fig. 13:: a pattern and a corresponding article of sportswear;
- Fig. 14:: a schematic front view and back view of an article of sportswear according to one embodiment;
- Fig. 15:: embodiments of an article of sportswear in the area of the sleeve edge and the leg trouser edge;
- Fig. 16:: embodiments of an article of sportswear in the area of the collar;
- Fig. 17:: further embodiments of an article of sportswear in the area of the collar;
- Fig. 18:: a view of an embodiment of a stretchable area of an article of sportswear;
- Fig. 19:: a view of an apparatus for moulding of textile materials; and
- Fig. 20:: steps of a method for seam bonding.

### 5. Detailed description of the invention

In the following, embodiments of the present invention of an article of sportswear are described in detail. However, it is to be understood that the present invention is not limited to articles of sportswear, but can be applied to other garments in order to improve the freedom of movements and wearing comfort.

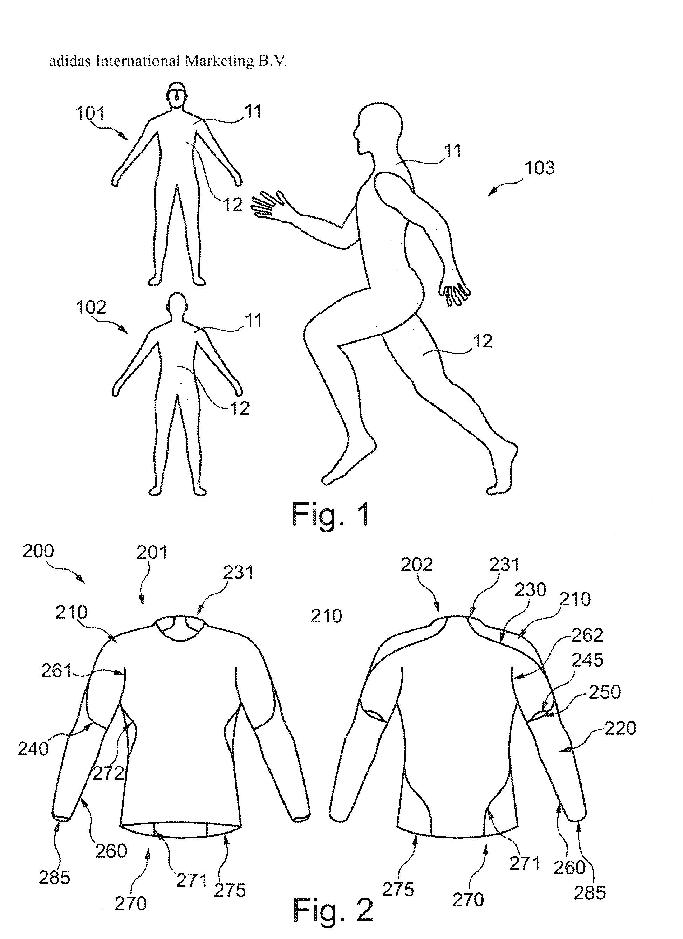

Fig. 1 shows a schematic front view 101, back view 102 and side view 103 of a human body in which primary stressed zones 11 and secondary stressed zones 12 are illustrated. These zones are particularly relevant during sports. The zones 11, 12 essentially extend from the neck and the shoulders along the upper part of the body, from the hip downwards, between the thighs, and in the area of the elbow, the bones of the wrist, the knee and the ankle.

In zones 11, 12 the material of the article of sportswear, for example a textile fabric, is stressed by movements in several respects. On the one hand, the material is stressed and compressed during each movement in the joints, especially the shoulder, the knee and the elbow. Therefore, abrasion of the article of sportswear can be observed in these areas. On the other hand, the material in the zones 11, 12 is stressed in that parts of the article of sportswear continuously rub against each other, in particular between the arms and the upper part of the body and between the legs. This leads to abrasion of the material which is particularly problematic along the seams.

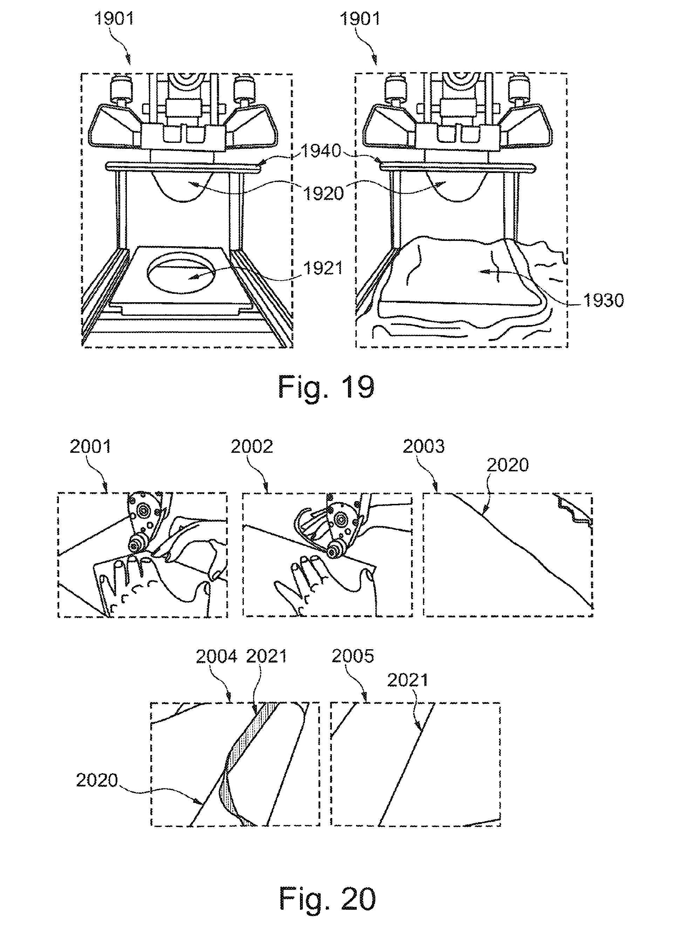

The stress on the article of sportswear in the zones 11, 12 has in addition disadvantages for the person who wears the article of sportswear. Stretching and compressing of the material in the area of the joints limits freedom of movements and requires additional force. In addition, this causes rubbing of the material on the skin which may cause chafing which is even worse when seams are located in these areas. Due to the connection of two parts of a textile material, seams are stiffer than the textile material itself and may in addition comprise sharp edges of the textile material. Also the sewing thread itself, in particular when made from a stronger material, may lead to skin chafing. Seams can also be glued or welded so that the use of sewing threads can be avoided for connecting two textile parts. The manufacture of seams is described below in connection with Fig. 20. Skin chafing may in addition occur when parts of the article of sportswear rub against each other, in particular between the arms and the upper part of the body and between the legs.

The mentioned problems are particularly relevant for tight-fitting garments which provide more freedom of movements due to their lower weight and their form fit than wide-shaped garments so that tight-fitting garments are preferred for sports activities.

Fig. 2 shows schematically a front view 201 and a back view 202 of an article of sportswear 200 which solves the above mentioned problems. In contrast to the prior art, the invention provides an integral solution which not only provides freedom of movements by the use of three-dimensionally shaped areas formed by heat moulding, but also enables a high wearing comfort by altering the shape of the seams, thereby minimizing skin chafing caused by the seams. In addition, seam abrasion is reduced.

As can be recognized in Fig. 2, the schematically illustrated article of sportswear 200 has no seams on the shoulder nor on the back side of the elbow. Rather, three-dimensionally shaped areas formed by heat moulding are arranged in the areas 210, 220 whose manufacture is described below in connection with Fig. 19. The areas formed by heat moulding 210, 220 offer freedom of movements for the shoulder and the elbow and reduce stretching and compression of the article of sportswear during movements.

In order to minimize their disadvantages, the seams of the article of sportswear illustrated in Fig. 2 are shifted with respect to the conventional straight lateral seams and therefore avoid areas which are critical for skin chafing. As can be recognized in Fig. 2, a curved seam 270 runs from the lower edge 275 on the back side 202 of the article of sportswear to the armpit area where it meets the sleeve seam 260 of the sleeve.

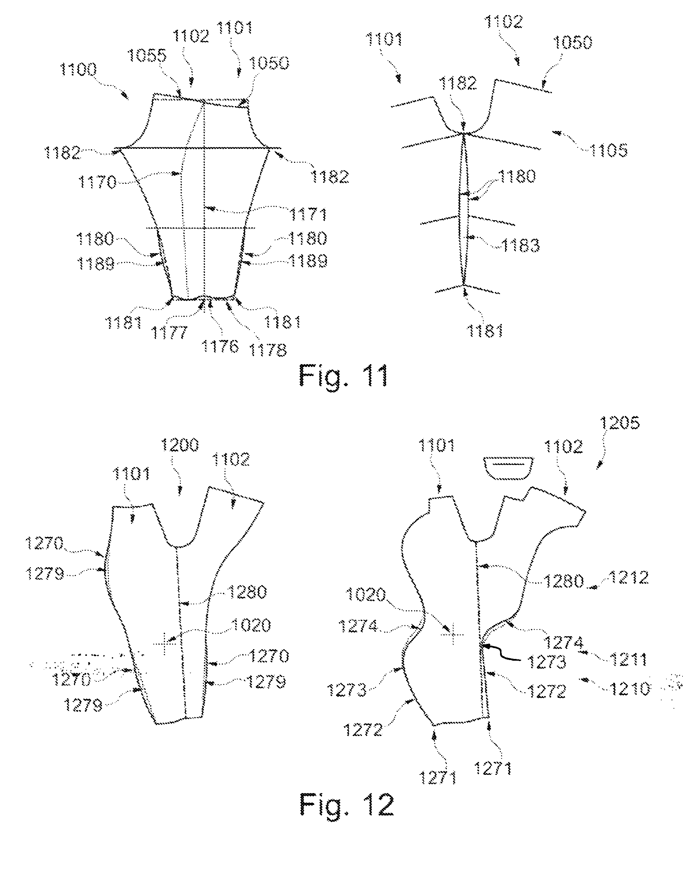

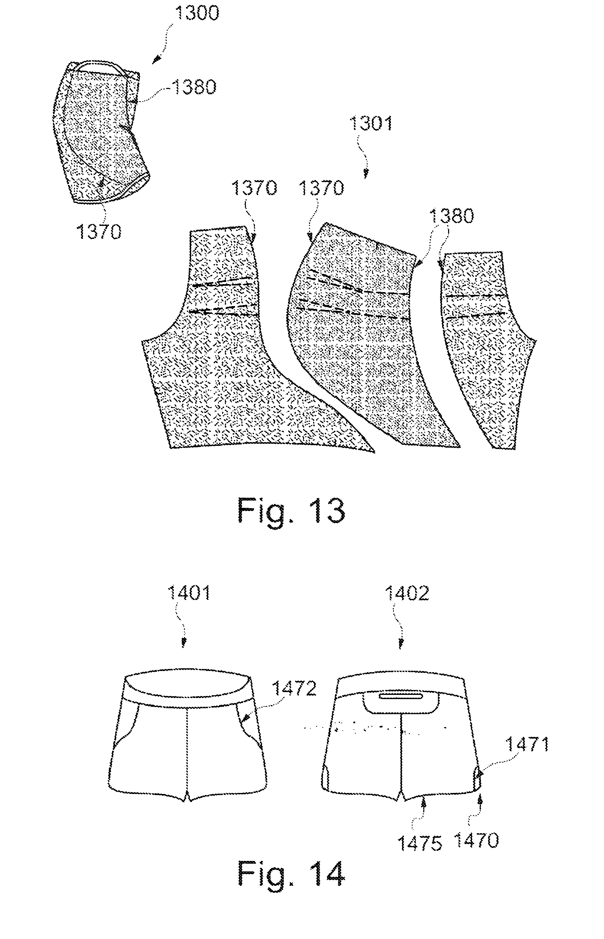

Preferably, the seam 270 comprises essentially two sections, wherein the lower section 271 extends at least partially on the back side 202 and wherein the upper section 272 extends at least partially on the front side 201 of the article of sportswear. In a further embodiment, the lower section 271 extends on the front side 201 and the upper section 272 extends on the back side 202. It is also preferred when the lower section 271 and the upper section 272 are oppositely curved. Curved seams, in addition to circumventing sensitive zones facilitate a three-dimensional shaping of the area of the curved seams which is described below in connection with Fig. 12 and 13. In a further embodiment, seam 270 comprises one or more straight sections.

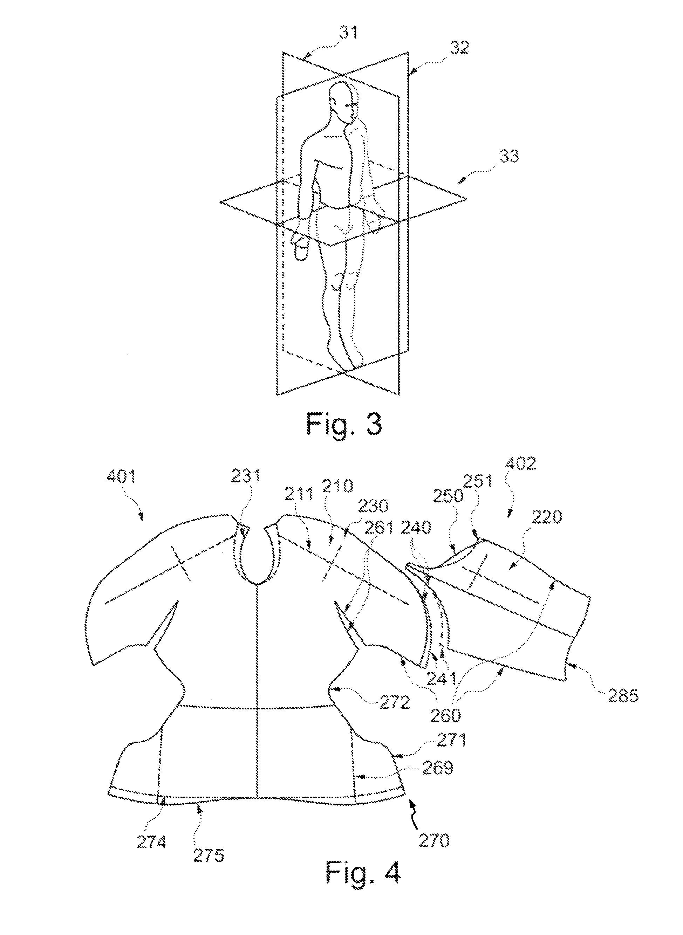

A further feature of the seam 270 is illustrated in connection with Fig. 3. Fig. 3 is a schematic representation of anatomical planes of a human body wherein the frontal plane 32, the sagittal plane 31 and the transversal plane 33 can be recognized. The frontal plane 32 is the plane which is visible in a frontal view of a human body and which runs vertically through the body. The medial frontal plane is the frontal plane which runs through the centre of the body. For simplicity, the medial frontal plane is designated as frontal plane 32 in the following. Typically, the front side and the back side of a garment are connected along the frontal plane 32. This is true, for example, for US patent 4,645,629 which is discussed in the introduction of the present application.

Therefore, the run of the seam 270 in Fig. 2 can be described as having an intersection with the frontal plane 32 of a body for which the article of sportswear is designed. Such a seam is appropriate for connecting a front area and a back area of an article of sportswear, since this seam runs in the area of the frontal plane 32. However, due to its curvature the seam 270 leads away from the frontal plane 32 which reduces skin chafing. In the embodiment of Fig. 2, seam 270 and the frontal plane 32 intersect twice, namely at the transition from the back side 202 to the front side 201 and in the armpit area where seam 270 meets the sleeve seam 260. Seam 270 therefore is displaced compared to the conventional seam along the frontal plane 32.

Referring again to Fig. 2, a curved shoulder seam 230 on the back side 202 of the article of sportswear 200 can be seen. Shoulder seam 230 extends from collar 231 below the shoulder area 210 formed by heat moulding and splits on the upper sleeve into a front seam 240 (which runs on the front side 201) and a back seam 250. Both seams 240, 250 further run around the upper sleeve and meet at the sleeve seam 260. The back seam 250 extends above the elbow area 220 formed by heat moulding. In an alternative embodiment (not illustrated), shoulder seam 230 extends on the front side 201 of the article of sportswear.

Similar to seam 270, shoulder seam 230 and frontal plane 32 of the body for which the article of sportswear 200 is designed intersect in Fig. 2. Preferably, the intersection with frontal plane 32 is located in the area of the intersection of shoulder seam 230, front seam 240 and back seam 250. Therefore, similar to seam 270, shoulder seam 230 is appropriate for connecting a front area and a back area of the article of sportswear 200. Since shoulder seam 230 is in addition curved, it does not further extend in frontal plane 32 but leaves this area and therefore facilitates the arrangement on the shoulder of a three-dimensionally shaped area 210 formed by heat moulding which provides freedom of movements without impeding wearing comfort by seams.

Further, Fig. 2 shows sleeve seam 260 mentioned above which runs on the sleeve of the article of sportswear. Sleeve seam 260 extends from sleeve edge 285 and meets the upper section 272 of seam 270, at which point sleeve seam 260 splits into scam 261 on front side 201 and seam 262 on back side 202 of the article of sportswear. As can be recognized, seams 261, 262 terminate below the area 210 on the shoulder formed by heat moulding without meeting another seam. In an alternative embodiment (not illustrated), seam 262 terminates at shoulder seam 230 on back side 202 of the article of sportswear. Preferably, sleeve seam 260 runs on the inner side of the sleeve. In an alternative embodiment (not illustrated), the sleeve seam runs on the outer side of the sleeve.

Preferably, the seams are symmetric between a right and a left side of the article of sportswear 200 in Fig. 2. Therefore, Fig. 2 as well as other figures illustrate the seams only on one side. In an alternative embodiment (not illustrated), the seams run in an asymmetric way. Asymmetric seams are advantageous for particular sports such as fencing or tennis due to their asymmetric movements.

It can be further recognized in Fig. 2 that a stretchable insert 245 is arranged above back seam 250 on back side 202 of the article of sportswear. Stretchable insert 245 comprises an elastic material, preferably Elastan. In one embodiment, stretchable insert 245 abuts back seam 250. Due to the large angle of the flexion of the elbow of up to 180°, stretchable insert 245 improves the freedom of movements in addition to the area 220 at the elbow formed by heat moulding. In further embodiments (not illustrated), stretchable inserts can be arranged in further positions of the article of sportswear which are subject to deformations during movements, for example in the area of the joints.

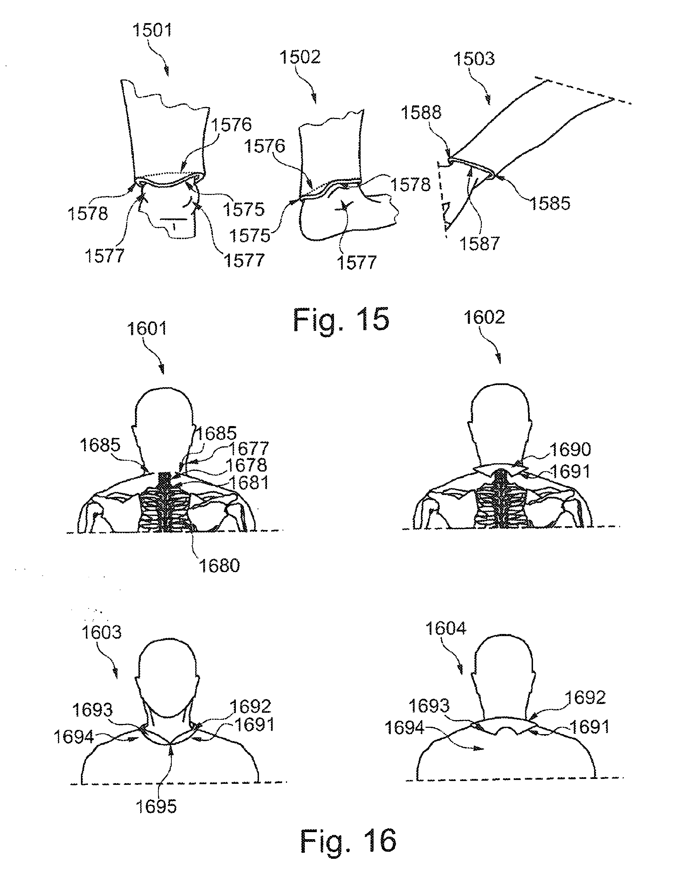

Fig. 2 further shows the anatomically formed sleeve edge 285 of the article of sportswear 200 which improves the wearing comfort, in particular of tight-fitting sportswear, and which is explained in detail in connection with Fig. 15.

Preferably, the seams in Fig. 2 are manufactured by welding and are located on the side of the skin away from the article of sportswear 200 which results in smooth seams on the inside which is advantageous for reduced skin chafing. The manufacture of such seams is described below in connection with Fig. 20.

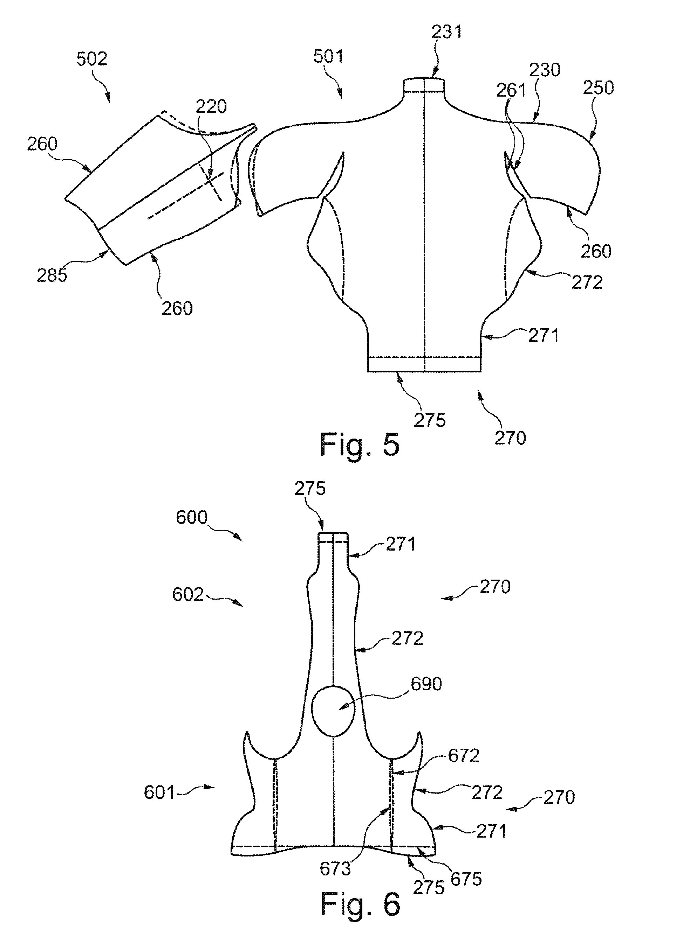

Fig. 4 shows a pattern of a front area 401 and a sleeve 402 which can be connected to the back area 501 and the sleeve 502 from Fig. 5, resulting in the article of sportswear 200 from Fig. 2. In each pattern, two edges form a seam. The two edges are connected during manufacture and are designated by the same reference numeral in the figures. The corresponding edge of an edge of the front area 401 in Fig. 4 can be located in Fig. 4 as well as in back area 501 in Fig. 5.

Fig. 4 illustrates seam 270 with lower section 271 and upper section 272 which are preferably curved and particularly preferred oppositely curved. Further, shoulder seam 230 and front seam 240 are illustrated. Back seam 250 extends on sleeve 402 and is oppositely curved to shoulder seam 230 and front seam 240. Finally, sleeve seam 260 and seam 261 are illustrated. Further elements in Fig. 2 are the three-dimensionally shaped areas at the shoulder 210 and at the elbow 220 formed by heat moulding, collar 231, lower edge 275 and sleeve edge 285. Lower edge 275 and sleeve edge 285 comprise plural curved sections which can also be recognized in Fig. 4. This shape omits the bones of the wrist so that sleeve edge 285 is advantageously shaped because it avoids pressure and / or chafing on the bones of the wrist and improves wearing comfort. The anatomical shape of sleeve edge 285 is explained in more detail in connection with Fig. 15 below.

In Fig. 4, seam crosses respectively indicate positions for placing a mould for creating a three-dimensionally shaped area formed by heat moulding. This will be explained below in connection with fig. 19. Results are three-dimensionally shaped areas at the shoulder and at the elbow.

Relocating the seam from a sensitive zone to a less sensitive zone can furthermore be seen in Fig. 4 in the case of seam 271 (relocated from conventionally positioned seam 269) and lower edge 275 (relocated from conventionally positioned seam 274). Further, conventionally positioned seams 241, 251 are relocated to positioned seams 240, 250 so that sleeve 402 is attached in a slightly curved manner. This creates a three-dimensional pre-shaped sleeve in the area of the elbow.

Fig. 5 shows the pattern corresponding to Fig. 4 of the back area 501 and the second sleeve 502 of the article of sportswear 200 from Fig. 2. Similar to Fig. 4, Fig. 5 illustrates seam 270 with lower section 271 and upper section 272, shoulder seam 230, back seam 250, sleeve seam 260 and seam 261, three-dimensionally shaped area at the elbow 220 formed by heat moulding, collar 231, lower edge 275 and sleeve edge 285. Seams having the same reference numerals are connected to form a seam during manufacture. As for the other figures, reference numerals in both figures are only shown for one of the two symmetric sides.

Fig. 6 shows a pattern of an article of sportswear made from a single piece of textile material 600. A front area 601 and a back area 602 can be recognized. In an alternative embodiment (not illustrated) both areas are exchanged. Further, Fig. 6 shows head opening 690, curved lower edge 275 and seam 270 with lower section 271 and upper section 272, both respectively in front area 601 and in back area 602. The curved lower edge 275 is obtained from relocating conventionally positioned seam 675. By connecting sections 271, 272 of front area 601 with the corresponding sections 271, 272 of back area 602 which results in seam 270, an article of sportswear is obtained from pattern 600. As can further be recognized in Fig. 6, there is no shoulder seam in pattern 600 which increases wearing comfort.

Fig. 6 further shows conventionally positioned seam 672 for connecting front area 601 and back area 602. As shown, conventionally positioned seam 672 requires a cut-out 673, in order to adjust the three-dimensional shape of the article of sportswear to the shape of the body, in particular a smaller diameter in the area of the waist than in the area of the breast and the hip. Instead, a corresponding three-dimensional shape can be obtained by the curved shape of the inventive seam 270, without requiring the complex cut-out 673. Seam 270 therefore fulfils a further function, apart from avoiding areas which are sensitive for skin chafing. Shaping of three-dimensionally shaped areas using curved seams is described below in connection with Fig. 12 and 13.

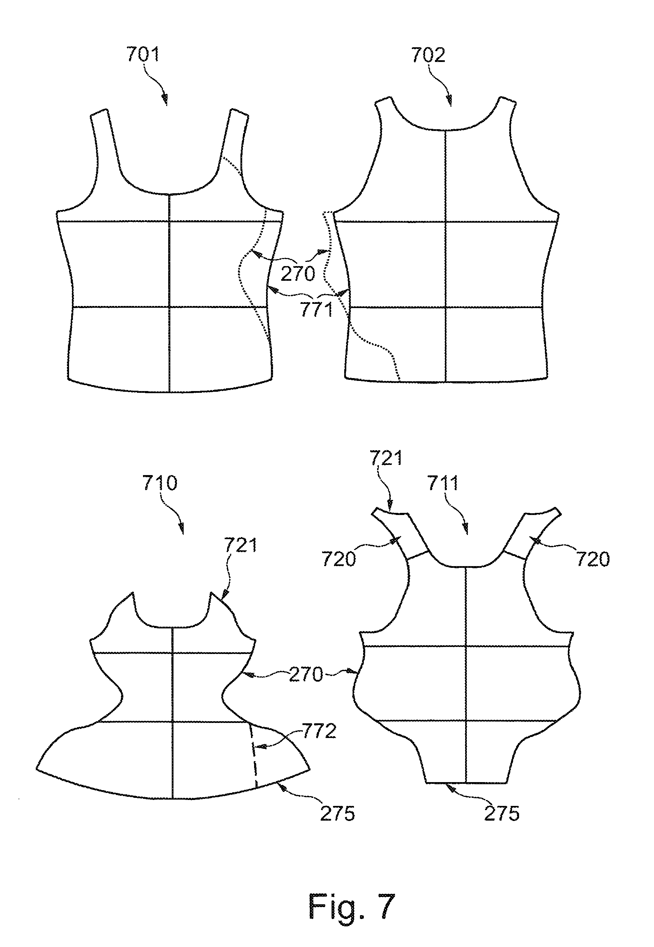

The upper part of Fig. 7 shows a further pattern for an article of sportswear with front area 701, back area 702, and seam 270. This figure shows particularly well how seam 270 is obtained by relocating conventionally positioned seam 771 which thereby essentially circumvents the area around conventionally positioned seam 771 which is critical for skin chafing. Nevertheless, seam 270 is appropriate as a connecting seam between front area 701 and back area 702 since it remains in a wider area of frontal plane 32 (see Fig. 3). However, seam 270 only intersects frontal plane 32 and curves away from it while conventionally positioned seam 771 completely remains in the frontal plane 32.

The lower part of figure 7 also shows a pattern of an article of sportswear having a front area 710 and a back area 711. Again, relocated seam 270, conventionally positioned seam 772 and lower edge 275 can be seen. Lower edge 275 is curved towards front area 710. The figure further shows that shoulder areas 720 of back area 711 are elongated such that the resulting shoulder seam 721 is no more located on the shoulder and therefore bypasses this sensitive area when front area 710 and back area 711 are connected. Therefore, the resulting article of sportswear neither has the conventionally positioned shoulder seam nor the conventionally positioned side seam.

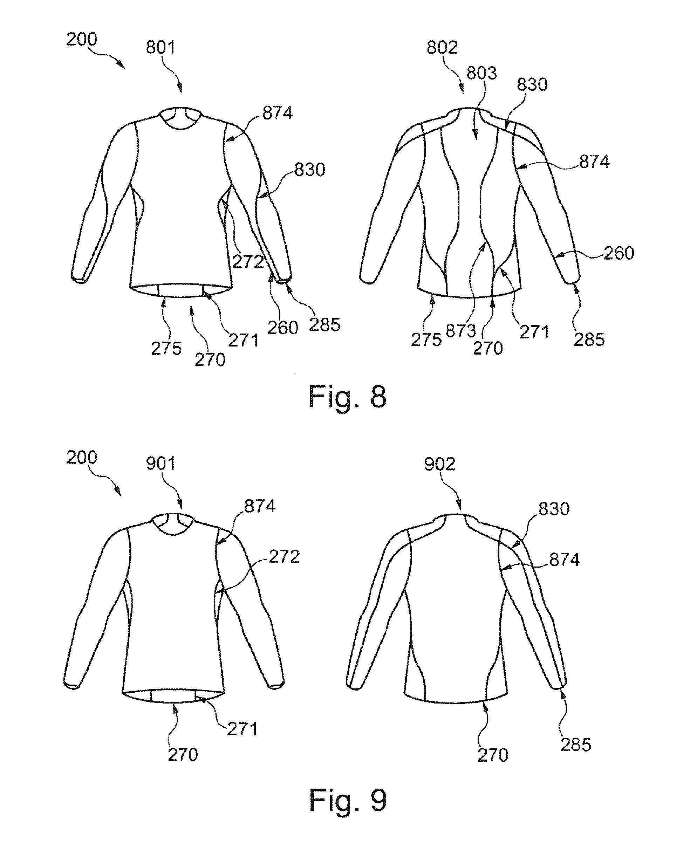

Fig. 8 shows a further embodiment of the article of sportswear 200 of Fig. 2. Again, the curved seam 270 can be recognized which extends from lower edge 275 on back side 802 to the armpit area of the article of sportswear where it meets sleeve seam 260. Lower section 271 of seam 270 extends at least partially on back side 802, and upper section 272 of seam 270 extends at least partially on front side 801 of the article of sportswear. Again, it is preferred that lower section 271 and upper section 272 are oppositely curved. Further, shoulder seam 830 can be seen which extends in the shoulder area on back side 802.

Compared to Fig. 2, a number of differences can be seen in Fig. 8. Seam 270 splits above lower edge 275 in lower section 271 and a further seam 873 which extends to shoulder seam 830. Seam 873 is preferably curved and comprises in a particularly preferred embodiment several oppositely curved sections. Seam 873 delimits, together with shoulder seam 830 and lower edge 275, an area 803 on back side 802 wherein in one embodiment a climate insert can be arranged. Preferably, the climate insert comprises a fabric permeable to air so that sweat on the skin of the wearer of the article of sportswear can easily evaporate and the back remains dry. The course of scam 873 may be determined by sweat areas, for example along the spine. Seam 873 is not necessary when there is no climate insert present.

Another difference to Fig. 2 is that shoulder seam 830 does not split in the embodiment of Fig. 8 but extends curvedly on front side 801 to sleeve edge 285. During transition from back side 802 to front side 801, shoulder seam 830 and frontal plane 32 (see Fig. 3) intersect. Again, shoulder seam 830 runs below the shoulder and therefore avoids a sensitive area. Further, another seam 874 runs as an extension of sleeve seam 260 over the shoulder of the article of sportswear, intersects with shoulder seam 830 and meets again sleeve seam 260 on the other side of the shoulder. Preferably, seam 874 is only present when there is no three-dimensionally shaped area on the shoulder formed by heat moulding.

Preferably, seam 874 is manufactured by stitching while the other seams are bonded by a method which is described in more detail in connection with Fig. 20.

Fig. 9 shows a further embodiment of the article of sportswear 200 from Fig. 2 in a back view 902 and a front view 901. Similar to Fig. 8, this embodiment comprises seam 874 at the shoulder. In contrast to the embodiment in Fig. 8, shoulder seam 830 extends completely on back side 902 of the article of sportswear, and back side 902 does not comprise seam 873 of Fig. 8. Preferably, seam 874 and shoulder seam 830 are executed as flat lock seams. Seam 874 is not necessary when there is a three-dimensionally shaped area formed by heat moulding and arranged on the shoulder.

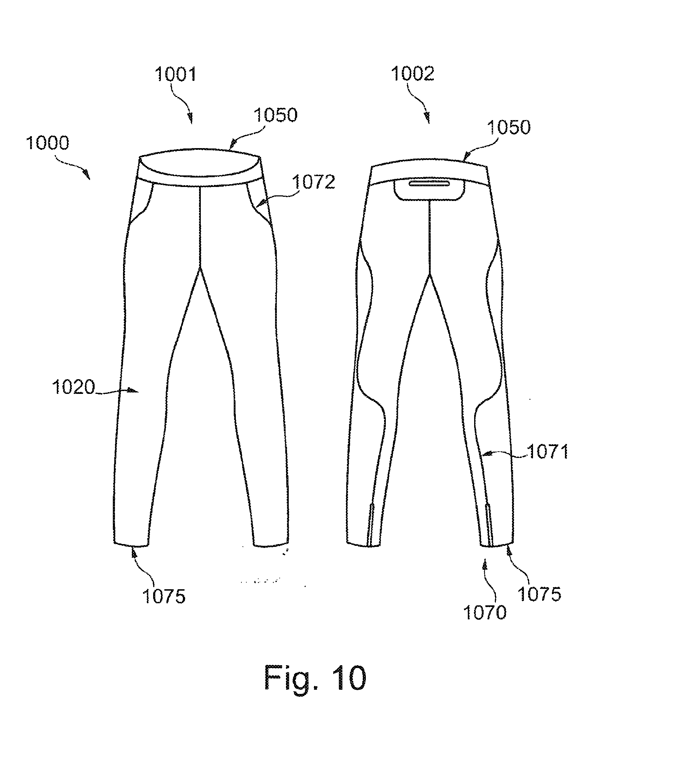

Fig. 10 is a schematic view of a further embodiment of an article of sportswear in which a front side 1001 and a back side 1002 of pants 1000, in particular tight-fitting pants, can be seen. In order to reduce their disadvantages, the seams of the article of sportswear shown in Fig. 10 are relocated with respect to conventionally positioned straight seams and therefore circumvent areas critical for skin chafing between the legs. In particular, there is no seam on the inside of the legs. Rather, as can be recognized in Fig. 10, a curved seam 1070 extends from lower edge 1075 on back side 1002 of the article of sportswear 1000. In further embodiments (not illustrated), seam 1070 may comprise one or more straight sections. Further, Fig. 10 shows a trouser waistband 1050 which is explained in more detail in connection with Fig. 11.

Preferably, seam 1070 essentially comprises two sections wherein lower section 1071 extends at least partially on back side 1002, and upper section 1072 extends at least partially on front side 1001 of the article of sportswear. In a further embodiment (not illustrated), lower section 1071 extends on front side 1001 and upper section 1072 extends on backside 1002.

In order to improve freedom of movements for the wearer of the article of sportswear 1000, a three-dimensionally shaped area 1020 formed by heat moulding is arranged in the area of the knee which reduces stretching and compression of the article of sportswear during movements. Further, lower edge 1075 is preferably anatomically shaped, in particular by a recess omitting the ankle which reduces skin chafing in this area, in particular for tight-fitting sportswear. This is explained in more detail in connection with Fig. 15.

Fig. 11 and 12 illustrate how, starting from a conventional pattern, the pattern for an article of sportswear according to the invention as in Fig. 10 can be obtained. On the left side in Fig. 11, a pattern 1100 of a trouser leg of an article of sportswear with a front area 1101 and a back area 1102 can be seen. The figure shows a conventionally positioned trouser waistband 1055 and seams 1180 running at the boundary of pattern 1100. By connecting seams 1180, conventionally positioned inner seam 1180 between the legs is generated. Further, Fig. 11 shows separating line 1171 between front area 1101 and back area 1102 which corresponds to a conventionally positioned outer seam of a pair of trousers.

Separating line 1171 further corresponds to the intersection of frontal plane 32 with a body on which the article of sportswear 1000 is worn (see Fig. 3).

Pattern 1100 in Fig. 11 shows how seams according to the invention are formed from a conventional pattern. In particular, conventionally positioned trouser waistband 1055 is moved downwards in front area 1101, preferably by 3-4 cm, and is raised in back area 1102, preferably by 2-3 cm, which generates the repositioned trouser waistband 1050 which is also illustrated in pattern 1105 on the right side of Fig. 11. This leads to a trouser waistband which follows the anatomical contour of the pelvic girdle and corresponds to its shape.

Further, conventionally positioned separating line 1171 between front area 1101 and back area 1102 is curved and relocated to back area 1102 in order to obtain line 1170, as can be seen in Fig. 11. Preferably, seam 1180 is relocated with respect to conventionally positioned seam 1189 by 1-2 cm, in order to obtain an anatomical shape.

Fig. 11 further shows trouser leg edge 1176 which is curved compared to conventional straight trouser leg edge 1178, in order to avoid skin chafing. In particular, trouser leg edge 1176 is curved so that there is a recess 1177 for the ankle which reduces chafing and pressure in this area. The recess 1177 for the ankle is located in the area of the intersection between trouser leg edge 1176 with separating line 1171 and therefore also with frontal plane 32 (see Fig. 3).

In order to obtain a pattern without an inner seam 1180, pattern 1100 is cut open along the new line 1170 and connected at points 1181 and 1182, as shown in pattern 1105 on the right side of Fig. 11. This generates a cut-out 1183 between points 1181 and 1182 since edges 1180 do not run in parallel.

By joining along edges 1180, cut-out 1183 can be avoided. This results in the left pattern 1200 in Fig. 12 in which the adapted edges 1180 from Fig. 11 are designated as line 1280 which corresponds to original inner seam 1180 of conventional pattern 1100 from Fig. 11. Conventional pattern 1100 from Fig. 11 can be advantageously replaced with pattern 1200.

Fig. 12 illustrates edges 1279 obtained by separating the relocated line 1170 in pattern 1100 of Fig. 11 and which edges therefore essentially run in parallel. By relocating the line of the edges and adding 1-2 cm, edges 1270 are obtained which provide an anatomical shape. By further relocating edges 1270 in a way so that both edges 1270 of pattern 1200 do no more run in parallel, edges 1271 in pattern 1205 on the right side of Fig. 12 are obtained. By connecting the non-parallel edges 1271 together to form a seam, a three-dimensional curved surface is generated which facilitates an adjustment to anatomical shapes. This will explained in the following in more detail. Connection of edges 1271 generates in particular a seam which corresponds to seam 1070 of the article of sportswear 1000 in Fig. 10.

The three-dimensional curved shape of sports pants generated by connecting edges 1271 can be described as follows. Starting from the lower edge of the sports pants, the diameter of the leg of the sports pants initially increases since the distance of the respectively sewn points 1272, 1273 increases in the area of the calf 1210. In the area of the knee 1211, the diameter of the leg of the sports pants essentially remains constant since the distance of the respectively sewed points 1273, 1274 essentially remains constant in the area of the knee 121 1. Finally, the diameter of the sports pants increases since the distance of the respectively sewn points in the area of the thigh 1212 increases. This progression of the curvature corresponds to the progression of the curvature of the article of sportswear 1000 in Fig. 10. The resulting shape is an example of a three-dimensionally shaped area which is created by a correspondingly shaped curved seam.

Fig. 12 further shows crosses for positioning a mould to create a three-dimensionally shaped area formed by heat moulding arranged at the knee. This will be explained in more detail in connection with Fig. 19 below.

In preferred embodiments and as shown in several preceding examples, the edges and seams are smoothly curved so that they do not comprise kinks. The particular advantage of smoothly curved edges and seams is that the resulting three-dimensional surfaces are also smoothly curved and have no kinks. Such kinks may arise, for example, when the seams of the pattern for forming the three-dimensional shape consist of sections of straight lines.

The use of oppositely curved seams, as also illustrated in several examples, has the further advantage that three-dimensional shapes with changing curvatures, for example decreasing and increasing diameters as described above, can be formed which nevertheless are smoothly curved and have no kinks in their curvature. This feature is particularly important for tight-fitting articles of sportswear since it increases freedom of movements and wearing comfort and reduces skin chafing. This provides another example of a three-dimensionally shaped area which is created by a correspondingly shaped curved seam.

Fig. 13 shows patterns for an article of sportswear, in particular tennis shorts, which illustrate a further example of creating three-dimensionally shaped articles of sportswear. In Fig. 13, pattern 1301 for tennis shorts 1300 can be seen. Pattern 1301 includes a pair of edges 1370 which are connected to obtain a corresponding seam 1370 of tennis shorts 1300. Edges 1370 comprise a plurality of oppositely curved sections. In particular, edges 1370 do not run in parallel. Due to the shape of edges 1370, their connection leads to a three-dimensional shape which from bottom to top initially gets wider, as long as the (flat) edges 1370 of pattern 1301 approximate each other. Towards the lower edge of pattern 1301, edges 1370 depart from each other so that the three-dimensional shape in this area becomes tighter when connecting edges 1370. This illustrates the formation of three-dimensional surfaces having a changing curvature by connecting non-parallel edges also having a changing curvature. This provides another example of a three-dimensionally shaped area which is created by a correspondingly shaped curved seam. In contrast to edges 1370, edges 1380 of pattern 1301 run in parallel so that no three-dimensional form is created when connecting edges 1380.

Fig. 14 is a schematic view of a further embodiment of an article of sportswear. In the figure, a front side 1401 and a back side 1402 of shorts can be recognized. A curved seam 1470 extends from lower edge 1475 on back side 1402 of the article of sportswear. Preferably, seam 1470 essentially comprises two sections, wherein lower section 1471 extends at least partially on back side 1402 and wherein upper section 1472 extends at least partially on front side 1401 of the article of sportswear. It is further preferred if lower section 1471 and upper section 1472 are oppositely curved. In a further embodiment (not illustrated), lower section 1471 extends on front side 1401 and upper section 1472 extends on back side 1402. Seam 1470 may comprise one or more straight sections.

Fig. 15 shows embodiments of an article of sportswear in the area of the trouser leg edge and the sleeve edge. The two left figures show a front view 1501 and a side view 1502 of an article of sportswear such as that shown in Fig. 10. In the figure, trouser leg edge 1575 is curved to avoid skin chafing. In particular, trouser leg edge 1575 is curved so that a recess 1578 is formed in the area of ankles 1577 to avoid chafing and pressure on ankles 1577.

In one embodiment which simplifies manufacture, trouser leg edge 1576 has a simplified shape. In front view 1501, the curvature of trouser leg edge 1576 is essentially constant, while the curvature of trouser leg edge 1576 in side view 1502 changes in the area of ankle 1577 so that it omits ankle 1577. This simplified form of trouser leg edge 1576 still provides adequate functionality and a simplified manufacture of the article of sportswear.

In a similar way, the illustration on the right of Fig. 15 shows a view of a sleeve 1503 of an article of sportswear such as that shown in Fig. 2. In the figure, a sleeve edge 1585 can be recognized which is curved so that it forms a recess 1588 for the bones of the wrist 1587 and therefore avoids chafing and pressure on the bones of the wrist 1587. Recess 1588 for wrist 1587 can be seen, for example, in the curved sleeve edges 285 in Fig. 2.

Fig. 16 shows a view of a person wearing an article of sportswear in the area of the collar and the shoulder. In front view 1601, cervical vertebra 1677 with the seventh cervical vertebra 1678, thoracic vertebra 1680 with the first thoracic vertebra 1681, and the upper trapezius muscles 1685 can be seen. In back view 1602, an area 1690 is marked whose lower edge 1691 essentially contours the seventh cervical vertebra 1678 and the upper trapezius muscles 1685 and therefore circumvents these areas. A corresponding form of a seam therefore leads to an article of sportswear which avoids skin chafing in these sensitive areas.

A corresponding article of sportswear is illustrated in back view 1604 of Fig. 16 in which an upper area 1694 and a collar 1693 of an article of sportswear are connected along lower edge 1691. Collar 1693 is further delimited by upper edge 1692 which is essentially uniformly curved in back view 1604.

In front view 1603, the contour of lower edge 1691 can be seen and it is essentially uniformly curved. In contrast to this, upper edge 1692 curves towards lower edge 1691 and forms angle 1695, preferably an acute angle, in the middle of the neck. The upper edge 1692 essentially contours the clavicle bone in this area.

Lower edge 1691 of collar 1692 runs along the seventh cervical vertebra, the trapezius muscles, and the clavicle bone. The seventh cervical vertebra and the trapezius muscles are bypassed in this way, in order to avoid pressure in these sensitive areas.

Preferably, collar 1693 has different padding in different areas, in order to protect the upper trapezius muscles 1685. The padding may be provided in another embodiment by a pre-shaped member or moulded member such as a foam member. In a further embodiment (not illustrated), collar 1693 comprises a three-dimensionally shaped area formed by heat moulding. Preferably, collar 1693 comprises no seams.

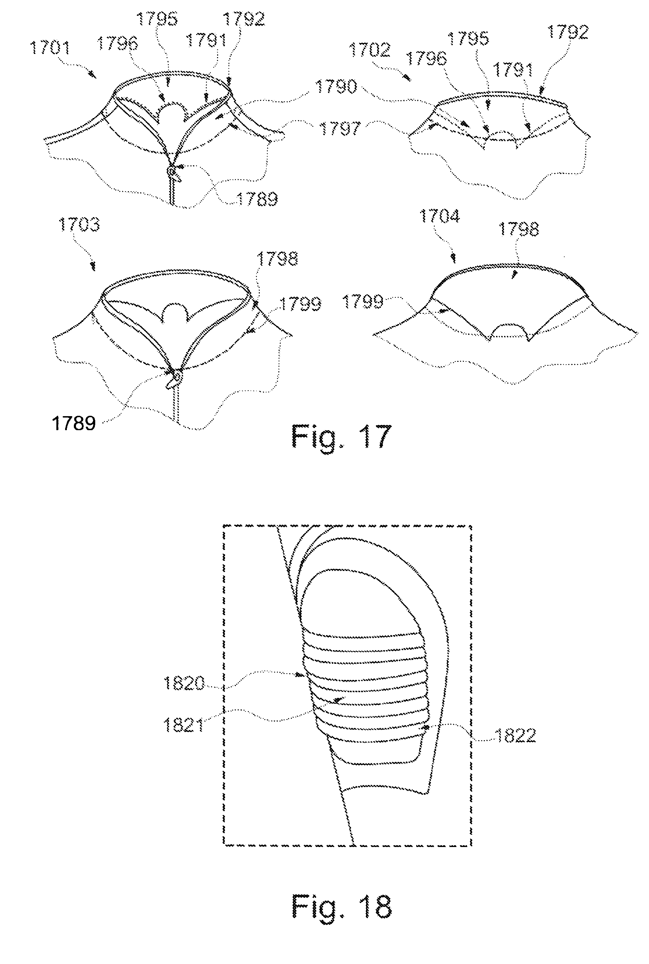

Fig. 17 shows further embodiments of an article of sportswear in the area of the collar. The first embodiment of a collar 1790 is illustrated in front view 1701 and in back view 1702, which in contrast to the embodiment of Fig. 16 does not comprise a circumferential lower edge. Rather, on the back side of collar 1790 a padded area 1795 is arranged whose upper edge is flush with upper edge 1792. Upper edge 1792 has a shape similar to upper edge 1692 of Fig. 16 so that it forms an angle 1789, preferably an acute angle 1789, in the middle of the neck in front view 1701 and therefore contours the clavicle bone.

Lower edge 1791 of padded area 1795 comprises several curved sections and is again similar to the shape of lower edge 1691 of Fig. 16. In particular, lower edge 1791 comprises section 1796 which contours seventh cervical vertebra 1678 and/or first thoracic vertebra 1681 from view 1601 of Fig. 16, in order to avoid an irritation of these vertebras by the article of sportswear. This is also illustrated by line 1797 which indicates the conventional form of the upper edge of a collar. Line 1797 intersects with both an area of the first cervical vertebra 1678 and / or the first thoracic vertebra 1681 as well as an area of the upper trapezius muscles 1685. The irritation of these areas caused by conventional collar edge 1797 is advantageously avoided by the particular form of lower edge 1791 which omits these areas.

A second embodiment of collar 1790 is illustrated in front view 1703 and back view 1704 of Fig. 17 which in contrast to the embodiment of views 1701 and 1702 comprises a circumferential collar 1798 which has a circumferential lower edge 1799. As can be recognized, angle 1789 touches lower edge 1799.

Fig. 18 is a view of an embodiment of a stretchable area of an article of sportswear which is preferably arranged in the area of joints such as the elbow which require high freedom of movements. As can be recognized, a stretchable area 1820 in Fig. 18 is formed by a bellow insert 1821. Insert 1821 may be manufactured from a textile material which differs from the material of the article of sportswear and which may in particular comprise elastic material. Insert 1821 comprises plural folds of the textile material which unfold when the underlying joint bends. This increases freedom of movements and wearing comfort of the article of sportswear and requires less force than stretching a tight-fitting elastic material. During frequent movements this may have a considerable positive effect on the fatigue of the wearer of the article of sportswear.

Fig. 19 is a view of an apparatus for moulding textile materials used to make three-dimensionally shaped areas formed by heat moulding of an article of sportswear. As can be recognized, Fig. 19 shows two views of a moulding machine 1901 with a mould 1920, a plate 1940, and an opening 1921. Mould 1920 corresponds to the desired shape of the body, for example a shoulder or an elbow. In alternative embodiments, the three-dimensionally shaped areas are not formed by heat but by other methods such as application of pressure.

During moulding, the textile material 1930 is first positioned over opening 1921. Then, plate 1940 is lowered which fixes the textile material 1930 on opening 1921. The heated mould 1920 is subsequently pressed through opening 1921 so that the textile material 1930 is stretched. The textile material 1930 is rapidly deformed by this stretching under the impact of the heated mould 1920. After a certain time period, the textile material is released again. As a result, it is permanently deformed. The three-dimensional forming of the textile material can also be achieved by other means such as the use of a negative mould.

Table 1 shows examples of moulding parameters. As can be seen, the article of sportswear preferably is essentially made from Polyester (PES), particularly preferred 100% Polyester. The three-dimensionally shaped area formed by heat moulding is preferably manufactured at a temperature of 150°C - 200°C, preferably 185°C - 195°C. This combination of material and temperature provides a particularly effective forming of the three-dimensionally shaped area.

In an alternative embodiment, the article of sportswear is essentially made from a Nylon-Elastan-blended fabric, particularly preferred 100% Nylon-Elastan-blended fabric. In this case, the three-dimensionally shaped area is moulded at a temperature of 150°C - 200°C, preferably 195°C.

**Table 1**

| **Moulding Parameters** | | | | | | | |
|---|---|---|---|---|---|---|---|
| **Fabric Name** | **Type** | **Composition** | **Mould** | **Moulding Temperature** | **Moulding period** | **Mold depth** | **Result** |
| | | | | **C** | **s** | **mm** | **mm** |
| | | | | | | | |
| Toray | Knit | 100% PES | Breast diameter 120 mm | 190 | 10 | 50 | 22 |
| | | | Shoulder Size 90 mm | 195 | 25 | 81 | 37 |
| | | | Shoulder Size 76 mm | 195 | 25 | 60 | 35 |
| | | | Shoulder Size 76 mm | 195 | 25 | 50 | 27 |
| | | | | | | | |
| Toray FX2702 | Woven | 100% PES | Shoulder Size 90 mm | 195 | 25 | 84 | 31 |
| | | | Shoulder Size 76 mm | 195 | 25 | 70 | 22 |
| | | | Breast diameter 120 mm | 190 | 10 | 50 | 20 |
| | | | | | | | |
| Edat | Knit | 95% Nylon, 5% Elastan | Breast diameter 120 mm | 195 | 25 | 55 | 30 |

Preferably, moulding of the three-dimensionally shaped area lasts 10 - 25 seconds. Already after this time a permanent shaping of the three-dimensional area is obtained, without, on the other hand, damaging the material of the article of sportswear. Mould 1920 preferably has an immersion depth of 1.5 - 2.5 times the depth of the formed three-dimensional area. The immersion depth of mould 1920 is particularly preferred in the range of 45 mm to 90 mm, and the resulting depth of the formed three-dimensional area is in the range of 15 mm to 60 mm.

Fig. 20 is an illustration of a method for seam manufacturing in which the following steps can be recognized. In the first step 2001, the two edges of the textile material to be connected are placed upon each other. In the second step 2002, the two edges are welded together, and the overlap is cut off. In the third step, the bonded textile material is opened so that welded seam 2020 is visible. In the fourth step 2004, welded seam 2020 is covered by a bonding tape 2021. This results in the fifth step 2005 in a very smooth seam 2021 on the side of the textile material opposite to the bonding tape 2021 which significantly reduces skin chafing. Alternatively to the method described above, the edges can be glued or welded using a method known in the prior art, and the generated seam may subsequently be covered by a bonding tape.

According to a second aspect of the invention which can be applied independently of the previously described embodiments, a garment comprises three-dimensionally shaped areas generated by connecting two edges of a pattern, wherein each of the two edges comprises several oppositely curved sections, and wherein the two edges of the pattern do not run in parallel. This leads to three-dimensionally shaped areas with oppositely curved surfaces for high freedom of movements and wearing comfort. Preferably, the edges of the pattern are smoothly curved which leads to smoothly curved three-dimensional surfaces, as described above. In one embodiment of this aspect of the invention, the garment further comprises three-dimensionally shaped areas formed by heat moulding.

## Claims

1. Garment (200, 1000), comprising:
a. at least one first three-dimensionally shaped area (210, 220, 1020) formed by heat moulding; and
b. at least one seam (270, 1070, 1470) connecting a front area (401, 601, 701, 1101) and a back area (402, 602, 702, 1102) of the garment (200, 1000);
c. wherein the seam (270, 1070, 1470) is curved; and wherein the seam (270, 1070, 1470) is formed by connecting a pair of curved, non-parallel edges of the front area (401, 601, 701, 1101) and the back area (402, 602, 702, 1102) of the garment (200, 1000) so that a second three-dimensionally shaped area of the garment (200, 1000) is created.

2. Garment (200, 1000) according to claim 1, wherein the seam (270, 1070, 1470) intersects a medial frontal plane (32) of a body of a wearer of the garment (200, 1000).

3. Garment (200, 1000) according to one of the preceding claims, wherein the seam (270, 1070, 1470) intersects the medial frontal plane (32) of the body of the wearer of the garment (200, 1000) more than once.

4. Garment (200, 1000) according to one of the preceding claims, wherein the seam (270, 1070, 1470) comprises at least two oppositely curved sections (271, 272; 1071, 1072; 1471, 1472).

5. Garment (200, 1000) according to the preceding claim, wherein the seam (270, 1070, 1470) comprises an upper curved section (272, 1072, 1472) which extends at least partially in front of the medial frontal plane (32) of the body of the wearer of the garment (200, 1000), and a lower curved section (271, 1071, 1471) which extends at least partially behind the medial frontal plane (32) of the body of the wearer of the garment (200, 1000).

6. Garment (200, 1000) according to one of the preceding claims, wherein the front area (601) and the back area (602) of the garment (200, 1000) are manufactured from a single textile part (600).

7. Garment (200, 1000) according to one of the preceding claims, wherein the seam (270, 1070, 1470) is bonded by welding and/or gluing.

8. Garment (200, 1000) according to one of the preceding claims, wherein the seam (270, 1070, 1470) extends on a side of the garment (200, 1000) opposite to the skin of a wearer.

9. Garment (200, 1000) according to one of the preceding claims, further comprising a sleeve, wherein a sleeve edge (285) of the sleeve of the garment (200, 1000) is formed so that it comprises a recess (1588) for the bones of a wearer's wrist (1587).

10. Garment (200, 1000) according to one of the preceding claims, wherein the garment (200, 1000) comprises at least one stretchable insert (245).

11. Garment (200, 1000) according to one of the preceding claims, wherein the garment (200, 1000) comprises at least one bellow insert (1820).

12. Garment (200, 1000) according to one of the preceding claims, wherein the at least one first three-dimensionally shaped area (210, 220, 1020) formed by heat moulding is preferably arranged in the area of the neck, the shoulder, the elbow, the breast, the knee and/or the waist of the body of the wearer of the garment (200, 1000).

13. Garment (200, 1000) according to one of the preceding claims, wherein the garment (200, 1000) essentially is made from Polyester, preferably 100% Polyester, and wherein the at least one first three-dimensionally shaped area (210, 220, 1020) formed by heat moulding is manufactured at a temperature of 150°C - 250°C, preferably 185°C - 195°C.

14. Garment (200, 1000) according to one of the claims 1 - 12, wherein the garment (200, 1000) essentially is made from a Nylon-Elastan blended fabric, preferably 100% Nylon-Elastan blended fabric, and wherein the at least one first three-dimensionally shaped area (210, 220, 1020) formed by heat moulding is manufactured at a temperature of 150 °C - 250°C, preferably 195°C.

15. Garment (200, 1000) according to one of the preceding claims, wherein the duration of forming the at least one first three-dimensionally shaped area (210, 220, 1020) is in the range of 10-25 seconds.

## Patentansprüche

1. Bekleidungsstück (200, 1000), aufweisend:
a. zumindest einen ersten dreidimensional geformten Bereich (210, 220, 1020), der durch Formen mit Wärme gebildet wird;
b. mindestens eine Naht (270, 1070, 1470) zur Verbindung eines vorderen Bereichs (401, 601, 701, 1101) und eines hinteren Bereichs (402, 602, 702, 1102) des Bekleidungsstücks (200, 1000),
c. wobei die Naht (270, 1070, 1470) gekrümmt ist, und wobei die Naht (270, 1070, 1470) durch Verbinden eines Paars von gekrümmten, nicht-parallelen Kanten des vorderen Bereichs (401, 601, 701, 1101) und des hinteren Bereichs (402, 602, 702, 1102) des Bekleidungsstücks (200, 1000) gebildet wird, so dass ein zweiter dreidimensional geformter Bereich des Bekleidungsstücks (200, 1000) erzeugt wird.

2. Bekleidungsstück (200, 1000) nach Anspruch 1, wobei die Naht (270, 1070, 1470) eine mittlere Frontalebene (32) eines Körpers des Trägers des Bekleidungsstücks (200, 1000) schneidet.

3. Bekleidungsstück (200, 1000) nach einem der vorangehenden Ansprüche, wobei die Naht (270, 1070, 1470) die mittlere Frontalebene (32) des Körpers des Trägers des Bekleidungsstücks (200, 1000) mehrfach schneidet.

4. Bekleidungsstück (200, 1000) nach einem der vorangehenden Ansprüche, wobei die Naht (270, 1070, 1470) mindestens zwei entgegengesetzt gekrümmte Abschnitte (271, 272; 1071, 1072; 1471, 1472) aufweist.

5. Bekleidungsstück (200, 1000) nach dem vorangehenden Anspruch, wobei die Naht (270, 1070, 1470) einen oberen gekrümmten Abschnitt (272, 1072, 1472) aufweist, der sich zumindest teilweise vor der mittleren Frontalebene (32) des Körpers des Trägers des Bekleidungsstücks (200, 1000) erstreckt, und einen unteren gekrümmten Abschnitt (271, 1071, 1471) aufweist, der sich zumindest teilweise hinter der mittleren Frontalebene (32) des Körpers des Trägers des Bekleidungsstücks (200, 1000) erstreckt.

6. Bekleidungsstück (200, 1000) nach einem der vorangehenden Ansprüche, wobei der vordere Bereich (601) und der hintere Bereich (602) des Bekleidungsstücks (200, 1000) aus einem einstückigen textilen Teil (600) gefertigt sind.

7. Bekleidungsstück (200, 1000) nach einem der vorangehenden Ansprüche, wobei die Naht (270, 1070, 1470) durch eine Verschweißung und / oder eine Verklebung verbunden wird.

8. Bekleidungsstück (200, 1000) nach einem der vorangehenden Ansprüche, wobei sich die Naht (270, 1070, 1470) auf einer der Seite des Bekleidungsstücks (200, 1000) erstreckt, die der Haut eines Trägers gegenüber liegt.

9. Bekleidungsstück (200, 1000) nach einem der vorangehenden Ansprüche, weiterhin aufweisend einen Ärmel, wobei eine Ärmelkante (285) des Ärmels des Bekleidungsstücks (200, 1000) so geformt ist, dass sie eine Aussparung (1588) für einen Handgelenksknochen (1587) eines Trägers aufweist.

10. Bekleidungsstück (200, 1000) nach einem der vorangehenden Ansprüche, wobei das Bekleidungsstück (200, 1000) mindestens einen dehnbaren Einsatz (245) aufweist.

11. Bekleidungsstück (200, 1000) nach einem der vorangehenden Ansprüche, wobei das Bekleidungsstück (200, 1000) mindestens einen Balgen-artigen Einsatz (1820) aufweist.

12. Bekleidungsstück (200, 1000) nach einem der vorangehenden Ansprüche, wobei der zumindest eine erste dreidimensional geformte Bereich (210, 220, 1020), der durch Formen mit Wärme gebildet wird, sich vorzugsweise im Bereich des Halses, der Schulter, des Ellenbogens, der Brust, des Knies und / oder der Taille des Körpers des Trägers des Bekleidungsstücks (200, 1000) befindet.

13. Bekleidungsstück (200, 1000) nach einem der vorangehenden Ansprüche, wobei das Bekleidungsstück im Wesentlichen, vorzugsweise zu 100%, aus Polyester besteht, und wobei der zumindest eine erste dreidimensional geformte Bereich (210, 220, 1020), der durch Formen mit Wärme gebildet wird, bei einer Temperatur von 150°C - 250°C, vorzugsweise 185°C - 195°C, hergestellt wird.

14. Bekleidungsstück (200, 1000) nach einem der Ansprüche 1 - 12, wobei das Bekleidungsstück (200, 1000) im Wesentlichen, vorzugsweise zu 100%, aus einem Nylon-Elastan-Mischgewebe besteht, und wobei der zumindest eine erste dreidimensional geformte Bereich (210, 220, 1020), der durch Formen mit Wärme gebildet wird, bei einer Temperatur von 150°C - 250°C, vorzugsweise 195°C, hergestellt wird.

15. Bekleidungsstück (200, 1000) nach einem der vorangehenden Ansprüche, wobei die Dauer des Formens des zumindest einen ersten dreidimensional geformten Bereichs (210, 220, 1020) 10-25 Sekunden beträgt.

## Revendications

1. Vêtement (200, 1000) comprenant :
a. au moins une première zone conformée tridimensionnellement (210, 220, 1020) réalisée par moulage à chaud ; et
b. au moins un raccord (270, 1070, 1470) reliant une région frontale (401, 601, 701, 1101) et une région dorsale (402, 602, 702, 1102) du vêtement (200, 1000 ) ;
c. dans lequel le raccord (270, 1070, 1470) est courbe ; et dans lequel le raccord (270, 1070, 1470) est formé en reliant une paire de bords courbes non parallèles de la région frontale (401, 601, 701, 1101) et de la région dorsale (402, 602, 702, 1102) du vêtement (200, 1000) de manière à créer une seconde zone conformée tridimensionnellement du vêtement (200, 1000).

2. Vêtement (200, 1000) selon la revendication 1, dans lequel le raccord (270, 1070, 1470) intersecte un plan frontal médian (32) d'un corps d'un porteur du vêtement (200, 1000).

3. Vêtement (200, 1000) selon l'une des revendications précédentes, dans lequel le raccord (270, 1070, 1470) intersecte le plan frontal médian (32) du corps du porteur du vêtement (200, 1000) plus d'une fois.

4. Vêtement (200, 1000) selon l'une des revendications précédentes, dans lequel le raccord (270, 1070, 1470) comprend au moins deux sections courbes opposées (271, 272 ; 1071, 1072 ; 1471, 1472).

5. Vêtement (200, 1000) selon la revendication précédente, dans lequel le raccord (270, 1070, 1470) comprend une section courbe supérieure (272, 1072, 1472) qui s'étend au moins partiellement devant le plan frontal médian (32) du corps du porteur du vêtement (200, 1000), et une section courbe inférieure (271, 1071, 1471) qui s'étend au moins partiellement derrière le plan frontal médian (32) du corps du porteur du vêtement (200, 1000).

6. Vêtement (200, 1000) selon l'une des revendications précédentes, dans lequel la région frontale (601) et la région dorsale (602) du vêtement (200, 1000) sont fabriquées à partir d'une pièce textile unique (600).

7. Vêtement (200, 1000) selon l'une des revendications précédentes, dans lequel le raccord (270, 1070, 1470) est assemblé par soudage et/ou collage.

8. Vêtement (200, 1000) selon l'une des revendications précédentes, dans lequel le raccord (270, 1070, 1470) s'étend sur un côté du vêtement (200, 1000) opposé à la peau d'un porteur.

9. Vêtement (200, 1000) selon l'une des revendications précédentes, comprenant en outre une manche, où un bord de manche (285) de la manche du vêtement (200, 1000) est formé de manière qu'il comprenne un évidement (1588) pour les os d'un poignet du porteur (1587).

10. Vêtement (200, 1000) selon l'une des revendications précédentes, dans lequel le vêtement (200, 1000) comprend au moins un insert extensible (245).

11. Vêtement (200, 1000) selon l'une des revendications précédentes, dans lequel le vêtement (200, 1000) comprend au moins un insert en soufflet (1820).

12. Vêtement (200, 1000) selon l'une des revendications précédentes, dans lequel la au moins une première région conformée tridimensionnellement (210, 220, 1020) réalisée par moulage à chaud est de préférence configurée dans la région du cou, de l'épaule, du coude, de la poitrine, du genou et/ou de la taille du corps du porteur du vêtement (200, 1000).

13. Vêtement (200, 1000) selon l'une des revendications précédentes, dans lequel le vêtement (200, 1000) est essentiellement réalisé en polyester, de préférence 100 % polyester, et dans lequel la au moins une première région conformée tridimensionnellement (210, 220, 1020) réalisée par moulage à chaud est fabriquée à une température de 150°C-250°C, de préférence 185°C-195°C.

14. Vêtement (200, 1000) selon l'une des revendications 1 à 12, dans lequel le vêtement (200, 1000) est essentiellement réalisé à partir d'un tissu mélangé nylon-élasthanne, de préférence un tissu mélangé 100 % nylon-élasthanne, et dans lequel la au moins une première région conformée tridimensionnellement (210, 220, 1020) réalisée par moulage à chaud est fabriquée à une température de 150°C-250°C, de préférence 195°C.

15. Vêtement (200, 1000) selon l'une des revendications précédentes, dans lequel la durée de formage de la au moins une première région conformée tridimensionnellement (210, 220, 1020) est comprise dans la plage de 10 à 25 secondes.
